# EUROPÄISCHE PATENTANMELDUNG

(11) **EP 4 838 780 A1**
(43) Veröffentlichungstag der Anmeldung: **11.11.2026**
(21) Anmeldenummer: 26169211.5
(22) Anmeldetag: 30.03.2026
(51) Int. Cl.: H02S 20/32, F24S 25/12, F24S 25/70, F24S 30/425, F24S 30/452, H02S 10/00, H02S 20/10, H02S 20/30, F24S 30/00

(54) **NACHFÜHRVORRICHTUNG**

(30) Priorität: 06.05.2025 DE 102025117356
(71) Anmelder: SL Rack GmbH, 83527 Haag (DE)
(72) Erfinder: Schletter, Ludwig, 83527 Haag i. OB (DE); Bauer, Georg, 83527 Haag i. OB (DE); Altmann, Andreas, 83059 Kolbermoor (DE)
(74) Vertreter: Lichtnecker, Markus Christoph

(57) **Zusammenfassung**

Die Erfindung betrifft eine Nachführvorrichtung für Solar- und/oder Photovoltaikmodule, aufweisend wenigstens zwei Pfosten, ein sich zumindest abschnittsweise zwischen den Pfosten erstreckendes und an den Pfosten drehbar gelagertes Zentralrohr, ein drehfest mit dem Zentralrohr verbundenes Bogensegment mit mehreren, seitlich angeordneten Aussparungen, und ein Zahnradgetriebe mit Zähnen, wobei das Zahnradgetriebe dazu ausgebildet ist, mit den Zähnen in die Aussparungen einzugreifen.

## Beschreibung

Die Erfindung betrifft eine Nachführvorrichtung für Solar- und/oder Photovoltaikmodule, aufweisend wenigstens zwei Pfosten und ein Bogensegment mit mehreren, seitlich angeordneten Lochungen, und ein Zahnradgetriebe mit Zähnen, wobei das Zahnradgetriebe dazu ausgebildet ist, mit den Zähnen in die Lochungen einzugreifen.

EP 3 966 930 B1 offenbart eine entsprechende Nachführvorrichtung. Der Inhalt der EP 3 966 930 B1 wird - insbesondere in Bezug auf die Ausführbarkeit und mögliche Ausgestaltungen der Erfindung - vollumfänglich in diese Anmeldung mit einbezogen.

Nachteilig an der EP 3 966 930 B1 ist, dass ein Querträger mit Trägern für die Solarmodule vorhanden ist. Die Enden des Bogensegments sind an dem Querträger befestigt. Dadurch gestaltet sich der Aufbau und die Montage vergleichsweise aufwändig und komplex.

Es ist daher eine Aufgabe der Erfindung, eine Nachführvorrichtung zu schaffen, welche eine einfache Montage ermöglicht.

Die Lösung dieser Aufgabe erfolgt durch die Gegenstände der unabhängigen Ansprüche.

Erfindungsgemäß ist die Nachführvorrichtung zum Nachführen von Solar- und/oder Photovoltaikmodulen ausgebildet und/oder kann hierzu verwendet werden.

Ein Nachführen kann beispielsweise anhand des Sonnenstands erfolgen. So kann stets dafür gesorgt werden, dass das Sonnenlicht unter einem optimalen Winkel auf die Solar- und/oder Photovoltaikmodule auftrifft.

Ferner kann ein Nachführen erfolgen, um die Solar- und/oder Photovoltaikmodule in eine Schutzposition, beispielsweise bei einem auftretenden Sturm, starken Winden, Hagel und/oder einem Gewitter, zu verstellen.

Auch ist ein Nachführen zu Reinigungszwecken denkbar. Beispielsweise können die Solar- und/oder Photovoltaikmodule bei Regen in eine gewünschte Position verstellt werden.

Schließlich kann ein Nachführen erfolgen, um die Solar- und/oder Photovoltaikmodule z.B. zumindest im Wesentlichen vertikal aufzustellen. Auf diese Weise wird Platz zwischen den Reihen geschaffen, um beispielsweise mit landwirtschaftlichen Nutzfahrzeugen den Boden bearbeiten zu können.

Das Nachführen kann vorzugsweise anhand einer Steuerungsvorrichtung erfolgen. Beispielsweise kann diese Sensoren aufweisen. Auch ein Nachführen anhand einer Zeitschaltuhr ist denkbar.

Die Nachführvorrichtung weist wenigstens zwei Pfosten auf.

Die Pfosten können beispielsweise in das Erdreich eingerammt werden bzw. eingerammt sein.

Die Nachführvorrichtung weist ein sich zwischen den Pfosten erstreckendes und an den Pfosten drehbar gelagertes Zentralrohr auf.

Vorzugsweise kann jeder Pfosten an seinem oberen Ende einen Lagersockel für das Zentralrohr aufweisen.

Das Zentralrohr kann sich relativ zum Pfosten bewegen, vorzugsweise verschwenken.

Die Nachführvorrichtung weist ein drehfest mit dem Zentralrohr verbundenes Bogensegment auf.

Bevorzugt ist das Bogensegment formschlüssig am Zentralrohr befestigt. Beispielsweise kann das Bogensegment am Zentralrohr verschraubt und/oder verschweißt sein. Ferner können das Bogensegment und das Zentralrohr auch einstückig gefertigt sein.

Die Verwendung eines Zentralrohrs sorgt für einen einfachen Aufbau und erleichtert die Montage. Der Montageaufwand wird somit reduziert. Ferner wird die Lastenverteilung der Module verbessert. So kann eine Vielzahl an Modulen an einem einzigen Zentralrohr befestigt werden.

Am Bogensegment sind mehrere, seitlich angeordnete Aussparungen vorgesehen.

Vorzugsweise sind die Aussparungen an einem gebogenen Abschnitt des Bogensegments angeordnet. Beispielsweise können die Aussparungen äquidistant nebeneinander platziert sein.

Die Aussparungen sind seitlich angeordnet, d.h. diese weisen nicht stirnseitig nach unten.

Eine seitliche Anordnung der Aussparungen ist gegenüber einer stirnseitigen Anordnung vorteilhaft. So können auftretende Kräfte besser kompensiert werden. Beispielsweise ist ein gewisses Spiel vorhanden, wenn die Nachführvorrichtung im Laufe der Zeit zum Beispiel absackt.

Bei den Aussparungen kann es sich bevorzugt um Löcher handeln, welche das Bogensegment vollständig durchdringen. Alternativ sind auch Einbuchtungen denkbar.

Die Nachführvorrichtung weist ein Zahnradgetriebe mit Zähnen auf.

Vorzugsweise kann das Zahnradgetriebe motorisch, z.B. elektrisch, angetrieben werden. Beispielsweise kann das Zahnradgetriebe mit der Steuerungsvorrichtung verbunden sein.

Der Begriff Zähne ist hierbei breit zu verstehen. Beispielsweise können diese zumindest im Wesentlichen dreieckförmig, rechteckförmig und/oder stiftförmig sein.

Beispielsweise kann es sich bei dem Zahnradgetriebe mit Zähnen um ein, vorzugsweise genormtes, Kettenrad handeln.

Das Zahnradgetriebe ist dazu ausgebildet, mit den Zähnen in die Aussparungen einzugreifen.

Bei einer Drehung des Zahnradgetriebes wird somit das Bogensegment und folglich das damit verbundene Zentralrohr verschwenkt, um die Solar- und/oder Photovoltaikmodule nachzuführen.

Es war überraschend, dass die Kombination aus einem Zentralrohr und einem Antrieb über seitlich angeordnete Aussparungen des Bogensegments trotz der grundsätzlich schwächeren Hebelwirkung ein sicheres und auch über einen längeren Zeitraum störungsfreies Nachführen von Solar- und/oder Photovoltaikmodulen ermöglicht.

So trägt das Zentralrohr zwar die gesamte Last. Aufgrund der seitlich angeordneten Aussparungen kann ein gegebenenfalls auftretendes Absacken jedoch automatisch kompensiert werden.

Im Gegensatz zu einer Nachführvorrichtung ohne Zentralrohr gestaltet sich die Montage zudem deutlich einfacher.

Weiterbildungen der Erfindung sind auch den abhängigen Ansprüchen, der Beschreibung sowie den beigefügten Zeichnungen zu entnehmen.

Gemäß einer Ausführungsform sind die Aussparungen als Lochungen, vorzugsweise Langlöcher, ausgebildet.

Die Lochungen können vorzugsweise größer als die Zähne dimensioniert sein. So kann ein gewisses Spiel vorhanden sein, um ein mögliches Absacken kompensieren zu können.

Die Langlöcher können beispielsweise als rechteckige Schlitze ausgebildet sein.

Nach einer weiteren Ausführungsform ist das Zahnradgetriebe, vorzugsweise höhenverstellbar, am Pfosten befestigt.

Dadurch, dass das Zentralrohr und das Zahnradgetriebe am Pfosten befestigt sind, führt ein Absacken zu keinen Störungen, da sich diese Bauteile in diesem Fall gemeinsam absenken.

Vorzugsweise ist je Pfosten ein separates Zahnradgetriebe vorgesehen. Bevorzugt können die Zahnradgetriebe untereinander über eine gemeinsame Welle gekoppelt sein.

Die optionale Höhenverstellbarkeit vereinfacht die Montage und ermöglicht eine Anpassung an das Gelände. Beispielsweise kann das Zahnradgetriebe in einer gewünschten Höhe am Pfosten montiert, z.B. verschraubt, werden.

Gemäß einer weiteren Ausführungsform vergrößert sich der Abstand zwischen einer Halteebene der Solar- und/oder Photovoltaikmodule und zwei an gegenüberliegenden Seiten des Zentralrohrs angeordneten, oberen Abschlüssen des Bogensegments vom Zentralrohr nach außen hin.

Die Halteebene definiert dabei eine Ebene, in der die Solar- und/oder Photovoltaikmodule angeordnet sind und/oder gehalten werden.

Bei den oberen Abschlüssen kann es sich vorzugsweise um obere Kanten des Bogensegments handeln.

Die oberen Abschlüsse sind bevorzugt gegenüber der Halteebene abgewinkelt. Beispielsweise können die beiden oberen Abschlüsse V-förmig angeordnet sein.

Der Abstand verhindert einen Kontakt zu den Solar- und/oder Photovoltaikmodulen, wodurch die Gefahr einer möglichen Beschädigung minimiert wird.

Nach einer weiteren Ausführungsform weist das Bogensegment zwei an gegenüberliegenden Seiten des Zentralrohrs angeordnete Endspeichen auf.

Vorzugsweise bilden die Endspeichen die oberen Abschlüsse des Bogensegments.

Beispielsweise können die Endspeichen jeweils am äußeren Ende des gebogenen Abschnitts des Bogensegments oder an Endbereichen des Bogensegments angeordnet sein.

Die Endspeichen können beispielsweise gerade und/oder parallel zueinander orientiert sein. Alternativ können diese auch abgewinkelt und/oder gebogen sein.

Alternativ kann das Bogensegment vollflächig ausgebildet sein. Die Endspeichen haben jedoch den Vorteil, dass Material eingespart werden kann. Ferner ist das Bogensegment dadurch winddurchlässig.

Gemäß einer weiteren Ausführungsform sind die Endspeichen achsensymmetrisch ausgebildet.

Dadurch erhöht sich beispielsweise die Stabilität.

Ferner kann die Montage erleichtert werden, da die Orientierung des Bogensegments bei der Montage keine Rolle spielt.

Nach einer weiteren Ausführungsform ist wenigstens eine Stützspeiche zwischen den Endspeichen vorgesehen.

Dadurch kann beispielsweise die Stabilität weiter erhöht werden.

Gemäß einer weiteren Ausführungsform weist das Zentralrohr eine eckige, vorzugsweise rechteckige, Querschnittfläche auf.

Beispielsweise kann die Querschnittsfläche quadratisch ausgebildet sein.

Das Drehmoment kann vom Bogensegment somit auf einfache Weise auf das Zentralrohr übertragen werden.

Nach einer weiteren Ausführungsform weist der Pfosten ein Rammprofil und eine Lagervorrichtung auf.

Vorzugsweise können das Rammprofil und die Lagervorrichtung, z.B. höhenverstellbar, aneinander befestigt, bevorzugt verschraubt, werden. Zur Höhenverstellung können beispielsweise mehrere Löcher vorgesehen sein.

Dies ermöglicht eine einfache Montage.

Beispielsweise kann das Rammprofil zunächst in das Erdreich gerammt werden. Je nach Gelände kann das Rammprofil beispielsweise zwischen 1,5 m und 2 m aus dem Erdreich ragen. Die Feineinstellung der Höhe kann dann über die Positionierung der Lagervorrichtung erfolgen.

Die Lagervorrichtung kann beispielsweise einen Lagersockel aufweisen. Am Lagersockel kann zum Beispiel das Zentralrohr drehbar befestigt sein.

Schließlich betrifft die Erfindung ein System mit einer erfindungsgemäßen Nachführvorrichtung und mehreren Solar- und/oder Photovoltaikmodulen.

Beispielsweise kann das System eine Vielzahl an Pfosten und/oder Zahnradgetrieben aufweisen.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit jedem Gegenstand der unabhängigen Ansprüche kombiniert werden.

Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englisch übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine Perspektivansicht einer Ausführungsform eines erfindungsgemäßen Systems,
- Fig. 2: eine Seitenansicht des Systems gemäß Fig. 2, und
- Fig. 3: eine Vorderansicht des Systems gemäß Fig. 2.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Die Anzahl der Pfosten, Nachführvorrichtungen sowie Solar- und/oder Photovoltaikmodule ist grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

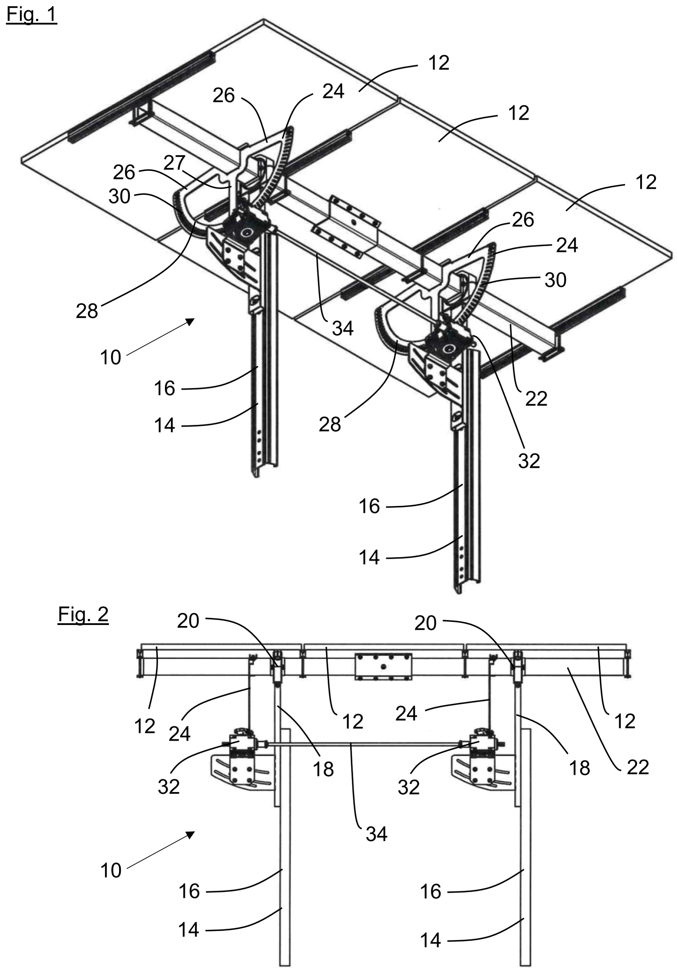

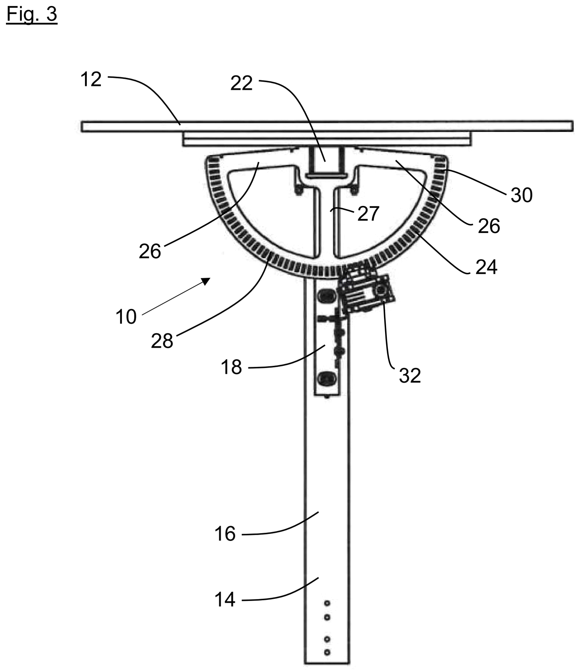

Fig. 1 bis Fig. 3 zeigen ein System mit einer Nachführvorrichtung 10 und mehreren Solar- und/oder Photovoltaikmodulen 12.

Die Nachführvorrichtung 10 weist zwei Pfosten 14 auf.

Die Pfosten 14 weisen ein Rammprofil 16 und eine Lagervorrichtung 18 mit einem Lagersockel 20 auf.

Am Lagersockel 20 ist ein Zentralrohr 22 drehbar gelagert.

Das Zentralrohr 22 erstreckt sich zwischen den Pfosten 14.

Ein Bogensegment 24 ist drehfest mit dem Zentralrohr 22 verbunden.

Endspeichen 26 bilden obere Abschlüsse des Bogensegments 24. Der Abstand der beiden Endspeichen 26 zu den Solar- und/oder Photovoltaikmodulen 12 vergrößert sich vom Zentralrohr 22 nach außen hin.

Zwischen den Endspeichen 26 ist eine Stützspeiche 27 vorgesehen.

Ein gebogener Abschnitt 28 des Bogensegments 24 weist mehrere, seitlich angeordnete Aussparungen 30 auf.

In diese Aussparungen 30 können Zähne eines Zahnradgetriebes 32 eingreifen.

Das Zahnradgetriebe 32 ist höhenverstellbar am Pfosten 14 befestigt.

Mehrere Zahnradgetriebe 32 können über eine gemeinsame Welle 34 verbunden sein.

### Bezugszeichenliste

- 10: Nachführvorrichtung
- 12: Solar- und/oder Photovoltaikmodul
- 14: Pfosten
- 16: Rammprofil
- 18: Lagervorrichtung
- 20: Lagersockel
- 22: Zentralrohr
- 24: Bogensegment
- 26: Endspeiche, oberer Abschluss
- 27: Stützspeiche
- 28: gebogener Abschnitt
- 30: Aussparung
- 32: Zahnradgetriebe
- 34: Welle

## Patentansprüche

1. Nachführvorrichtung (10) für Solar- und/oder Photovoltaikmodule (12), aufweisend
wenigstens zwei Pfosten (14),
ein sich zumindest abschnittsweise zwischen den Pfosten (14) erstreckendes und an den Pfosten (14) drehbar gelagertes Zentralrohr (22),
ein drehfest mit dem Zentralrohr (22) verbundenes Bogensegment (24) mit mehreren, seitlich angeordneten Aussparungen (30), und
ein Zahnradgetriebe (32) mit Zähnen, wobei
das Zahnradgetriebe (32) dazu ausgebildet ist, mit den Zähnen in die Aussparungen (30) einzugreifen.

2. Nachführvorrichtung (10) nach Anspruch 1,
**dadurch gekennzeichnet,**
**dass** die Aussparungen (30) als Lochungen, vorzugsweise Langlöcher, ausgebildet sind.

3. Nachführvorrichtung (10) nach Anspruch 1 oder 2,
**dadurch gekennzeichnet,**
**dass** das Zahnradgetriebe (32), vorzugsweise höhenverstellbar, an einem der Pfosten (14) befestigt ist.

4. Nachführvorrichtung (10) nach einem der vorhergehenden Ansprüche,
**dadurch gekennzeichnet,**
**dass** sich der Abstand zwischen einer Halteebene der Solar- und/oder Photovoltaikmodule (12) und zwei an gegenüberliegenden Seiten des Zentralrohrs (22) angeordneten, oberen Abschlüssen (26), vorzugsweise oberen Kanten, des Bogensegments (24) vom Zentralrohr (22) nach außen hin vergrößert.

5. Nachführvorrichtung (10) nach einem der vorhergehenden Ansprüche,
**dadurch gekennzeichnet,**
**dass** das Bogensegment (24) zwei an gegenüberliegenden Seiten des Zentralrohrs (22) angeordnete Endspeichen (26) aufweist, welche vorzugsweise die oberen Abschlüsse des Bogensegments (24) bilden.

6. Nachführvorrichtung (10) nach Anspruch 5,
**dadurch gekennzeichnet,**
**dass** die Endspeichen (26) achsensymmetrisch ausgebildet sind.

7. Nachführvorrichtung (10) nach Anspruch 5 oder 6,
**dadurch gekennzeichnet,**
**dass** wenigstens eine Stützspeiche (27) zwischen den Endspeichen (26) vorgesehen ist.

8. Nachführvorrichtung (10) nach einem der vorhergehenden Ansprüche,
**dadurch gekennzeichnet,**
**dass** das Zentralrohr (22) eine eckige, vorzugsweise rechteckige, Querschnittfläche aufweist.

9. Nachführvorrichtung (10) nach einem der vorhergehenden Ansprüche,
**dadurch gekennzeichnet,**
**dass** der Pfosten (14) ein Rammprofil (16) und eine Lagervorrichtung (18) aufweist.

10. System mit einer Nachführvorrichtung (10) nach einem der vorhergehenden Ansprüche und mehreren Solar- und/oder Photovoltaikmodulen (12).
